(19) Europäisches Patentamt
European Patent Office
Office européen des brevets

(11) **EP 1 168 469 B1**

(12) **EUROPEAN PATENT SPECIFICATION**

(45) Date of publication and mention
of the grant of the patent:
**16.05.2007 Bulletin 2007/20**

(51) Int Cl.:
*H01M 2/16* (2006.01)        *B01D 67/00* (2006.01)
*B01D 71/26* (2006.01)

(21) Application number: **01114390.6**

(22) Date of filing: **13.06.2001**

(54) **Porous film and separator for battery using the same**

Poröser Film und Separator für eine Batterie, die diesen verwendet

Film poreaux et séparateur pour batterie utilisant celui-ci

(84) Designated Contracting States:
**DE FR GB IT NL**

(30) Priority: **14.06.2000 JP 2000178006**

(43) Date of publication of application:
**02.01.2002 Bulletin 2002/01**

(73) Proprietor: **Sumitomo Chemical Company, Limited**
**Tokyo 104-8260 (JP)**

(72) Inventors:
• **Hoshida, Daijiro**
**Tsukuba-shi,**
**Ibaraki (JP)**
• **Takahashi, Tsutomu**
**Tsukuba-gun,**
**Ibaraki (JP)**
• **Yamada, Takeshi**
**Takatsuki-shi,**
**Osaka (JP)**
• **Shinohara, Yasuo**
**Niihari-gun,**
**Ibaraki (JP)**

(74) Representative: **Vossius & Partner**
**Siebertstrasse 4**
**81675 München (DE)**

(56) References cited:
**EP-A- 1 097 961        US-A- 4 545 950**
**US-A- 5 230 843**

**Description**

The present invention relates to a porous film produced by stretching a sheet obtained by kneading a polyethylene with fine particles, a separator for battery using the porous film, and a battery using the separator

Up to now, polyolefin porous films find use in various applications, such as sanitary materials, medical materials, and separators for use in batteries, and are required to have various properties according to their applications.

There has been known a method for preparing a porous film by stretching a sheet, uniaxially or biaxially, comprising a polyolefin compounded with fine particles. One example of such a porous film prepared by this method results from stretching a film or sheet prepared by melt-molding a composition comprising a polyolefin, a filler (fine particles), and triglyceride (Japanese Patent Laid-Open No. SHO 62-10141). This porous film, however, has an insufficient strength for a use as a separator of lithium secondary battery.

Japanese Patent Laid-Open No. HEI 9-157423 discloses a porous film prepared by: molding a resin composition comprising a high-molecular-weight polyethylene resin and a plasticizer into a film by melt extrusion; cooling the film; and removing the plasticizer contained in the film, followed by stretching. In this process, extraction of the plasticizer with use of an organic solvent is indispensable and hence an increased number of steps are included to make the process complicated.

US-A-4,545,950 relates to a process for producing stretched articles of ultrahigh-molecular-weight polyethylene by melt-kneading a mixture of ultrahigh-molecular-weight polyethylene with a paraffinic wax having a melting point of 40° to 120°C and a weight average molecular weight of at least 230 but less than 2000 in a screw extruder while maintaining the temperature of the mixture at 180° to 280°C. The molten mixture is melt-extruded through a die at a temperature of 180° to 300°C and the resulting unstretched extrudate is cooled to solidify it. The unstretched solidified extrudate is then subjected to a stretching treatment at a temperature of 60° to 140°C at a particular stretch ratio.

An object of the present invention is to provide a porous film having a high strength, which can be prepared easily and simply, a separator for battery using the same, and a battery using the separator.

The object of the present invention has been solved by a porous film prepared by: melt-kneading a high-molecular-weight polyethylene a low-molecular-weight polyethylene, and fine particles; molding the kneaded matter into a sheet; and stretching the sheet, which porous film has a high piercing strength and superior ion permeability.

Accordingly, the present invention is directed to a porous film obtainable by melt-kneading a high-molecular-weight polyethylene having a weight-average molecular weight of not less than $5 \times 10^5$, a polyethylene having a weight-average molecular weight of not more than $2 \times 10^4$, and fine particles, molding the kneaded matter into a sheet, and then stretching the sheet, wherein the polyethylene having a weight-average molecular weight of not more than $2 \times 10^4$ has a density difference from the high-molecular-weight polyethylene of within $\pm 0.02$ g/cm$^3$.

The present invention is also directed to a composite porous film having a structure comprising the porous film described above and a porous film of a heat resistant resin

The high-molecular-weight polyethylene used in the present invention has a weight-average molecular weight of not less than $5 \times 10^5$, preferably within the range between $1 \times 10^6$ and $15 \times 10^6$. If the weight-average molecular weight is less than $5 \times 10^5$, there may be a case where a porous film having a high modulus of elasticity and a high strength, which are characteristic of a high-molecular-weight polyethylene, is not obtained. Though there is no particular limitation to the upper limit of the weight-average molecular weight, a polyethylene having a weight-average molecular weight of more than $15 \times 10^6$ may have inferior moldability into a sheet.

Examples of such high-molecular-weight polyethylene include high-molecular-weight homopolymers or copolymers of ethylene. Among them, a high-molecular-weight polyethylene comprising ethylene as a major component is preferable.

The thermoplastic resin polyethylene used in the present invention has a weight-average molecular weight of not more than $2 \times 10^4$ and suitably is compatible with the aforementioned high-molecular-weight polyethylene.

The resin compatible with a high-molecular-weight polyethylene means a resin which provides a resin composition prepared by melt-kneading a high-molecular-weight polyethylene and the resin at a ratio of 7:3 to 3:7 with use of a kneader, for example, Laboplasto-mill (manufactured by Toyo Seiki Seisaku-Sho, Ltd.), at 200°C and 90 r.p.m. for 10 minutes, which resin composition has a single peak of melting point when measured by DSC, or which provides a resin composition prepared by melt-kneading the high-molecular-weight polyethylene and the thermoplastic resin resuming in a visually homogeneous film when the composition is press-molded and stretched into a film.

The thermoplastic resin is a thermoplastic resin having a weight-average molecular weight of not more than $2 \times 10^4$, preferably not more than $1 \times 10^4$. The thermoplastic resin is low-molecular-weight polyethylene having a weight-average molecular weight of not more than $2 \times 10^4$ because it exhibits superior compatibility with the high-molecular-weight polyethylene. More preferable is a low-molecular-weight polyethylene having branches in a comparable amount to the branches of the high-molecular-weight polyolefin used because it exhibits further superior compatibility with the high-molecular-weight polyethylene. Specifically, suitable is such a low-molecular-weight polyethylene which has a density difference from the high-molecular-weight polyolefin of within $\pm 0.02$ g/cm$^3$, more suitably within $\pm 0.01$ g/cm$^3$.

If the thermoplastic resin has a weight-average molecular weight of more than $2 \times 10^4$, it may exhibit lowered compatibility with the high-molecular-weight polyolefin.

It should be noted that with respect to the amounts of the high-molecular-weight polyethylene and the thermoplastic resin, preferably the amount of the high-molecular-weight polyolefin is 30% to 90% by weight and the amount of the thermoplastic resin is 70% to 10% by weight more preferably the amount of the high-molecular-weight polyethylene is 60% to 80% by weight and the amount of the thermoplastic resin is 40% to 20% by weight.

If the amount of the high-molecular-weight polyethylene is more than 90% by weight, there may be a case where the resulting film is not homogeneous or molding is impossible. If it is less than 30% by weight, there may be a case where a high strength, which is characteristic of the high-molecular-weight polyolefin, does not result.

Incidentally, within such a range as not to lower the compatibility, a thermoplastic resin other than the high-molecular-weight polyethylene and the thermoplastic resin having a weight-average molecular weight of not more than $2 \times 10^4$ may be included in an amount of not more than 70% by weight based on 100% by weight of the thermoplastic resin having a weight-average molecular weight of not more than $2 \times 10^4$. Such a thermoplastic resin has usually a molecular weight of more than $2 \times 10^4$ and less than $5 \times 10^5$, and a linear low-molecular-weight polyethylene is exemplified.

The molecular weight of the high-molecular-weight polyethylene, the low-molecular-weight polyethylene or other resin can be determined by GPC measurement, in terms of polystyrene reduced weight average molecular weight. The measurement can be conducted, for example, with using o-dichlorobenzene as a solvent at 140°C.

The fine particles used in the present invention have an average particle diameter of not more than 3 μm, preferably not more than 1 μm, more preferably not more than 0.5 μm. Preferably, the average particle diameter of the fine particle is not less than 0.02 μm. If the average particle diameter is less than 0.02 μm, it is difficult for such fine particles to be filled into the resin and, besides, opening of pores by stretching may become insufficient. The term "average particle diameter" used herein means an average particle diameter calculated from a particle size distribution determined by laser scattering method which measures the diameters of primary particles dispersed in air.

The fine particles used in the present invention are inorganic or organic fine particles that are generally called a filler.

Examples of inorganic fine particles include calcium carbonate, talc, clay, kaolin, silica, hydrotalcite, diatomaceous earth, magnesium carbonate, barium carbonate, calcium sulfate, magnesium sulfate, barium sulfate, aluminum hydroxide, magnesium hydroxide, calcium oxide, magnesium oxide, titanium oxide, alumina, mica, zeolite, glass powder, and zinc oxide. Particularly preferable among them are calcium carbonate and barium sulfate because they can be provided as particles of a smaller diameter and have a lower water content. If the water content is low, use of the porous film as a separator for non-aqueous batteries causes less bad influence on the battery performance.

Known resin particles can be used as the organic fine particles. Examples of preferable resins include homopolymers or copolymers of two or more of styrene, vinylketone, acrylonitrile, methyl methacrylate, ethyl methacrylate, glycidyl methacrylate, glycidyl acrylate, and methyl acrylate, and polycondensed resins of melamine, urea and the like.

The fine particles used in the present invention are suitably water soluble. The water soluble fine particles are easily removed by washing with neutral, acidic or alkaline aqueous solution, according to the requirements. The water soluble particles among the above organic or inorganic particles are not especially limited as long as they are soluble in either of neutral, acidic or alkaline aqueous solution. Examples of them are talc, clay, kaolin, diatomaceous earth, calcium carbonate, magnesium carbonate, barium carbonate, magnesium sulfate, calcium oxide, magnesium hydroxide, calcium hydroxide, zinc oxide, and silica, and preferable is calcium carbonate.

The fine particles used in the present invention are preferably surface-treated to improve their dispersibility with respect to the high-molecular-weight polyethylene and the thermoplastic resin, to facilitate the interfacial peeling with the resin, or to prevent absorption of water from the outside. Examples of surface-treating agents include higher fatty acids, such as stearic acid and lauric acid, and metal salts thereof.

The mixing proportion of the fine particles to 100 parts by volume of the sum of the high-molecular-weight polyethylene, the thermoplastic resin and the fine particles is preferably 15 to 50 parts by volume, more preferably 25 to 35 parts by volume, though it depends upon the kind of the fine particle used or the surface-treated condition of the fine particles. If the proportion of the fine particles is less than 15 parts by volume, opening of pores after stretching may sometimes be insufficient and, hence, the film resistance may increase. On the other hand, if it is more than 50 parts by volume, the continuity of the resin may be interrupted and, hence, breakage due to stretching is likely and, in addition, the strength of the film may lower.

The resin used in the present invention may be admixed with generally-used additives (an antistatic agent, a plasticizer, a lubricant, an antioxidant, and a nucleating agent) unless the purpose of the present invention is impaired.

According to the present invention, the film resistance is defined by the formula (1):

$$\texttt{film resistance (sec·μm}^2\texttt{/100cc) = td}^2 \quad \dots \quad \dots(1)$$

where t represents a gas transmission rate in terms of Gurley value (sec/100cc) and d represents a pore diameter ($\mu$m) determined by a bubble point method.

A lower film resistance indicates better ion permeability.

In the case where the porous film alone is used as a separator in a battery, the film resistance thereof is preferably not more than 5 sec - $\mu$m$^2$/100cc though depending upon the material of the porous film.

A battery using a separator having good ion permeability has an excellent load characteristic to be described below. The load characteristic is the proportion of an electric capacity which can be taken out when a large current is applied to the battery based on an electric capacity which can be taken out when a feeble current is applied to the battery. The excellent load characteristic is required where the battery is a secondary battery, such as a lithium battery.

The porous film of the present invention may have a structure laminated with a porous layer of a polyolefine, polyurethane, and the like.

A porous film of the present invention is obtained by melt-kneading a high-molecular-weight polyethylene having a weight-average molecular weight of not less than $5 \times 10^5$, a polyethylene (thermoplastic resin) having a weight-average molecular weight of not more than $2 \times 10^4$ and fine particles, wherein the polyethylene having a weight-average molecular weight of not more than $2 \times 10^4$ has a density difference from the high-molecular weight polyethylene of within $\pm$ 0.02 g/cm$^3$, molding the kneaded matter into a sheet, and then stretching the sheet.

For example, a composition comprising the high-molecular-weight polyethylene and the thermoplastic resin is mixed with fine particles and, as the need arises, with a stretching aid, such as a fatty ester, and other additives using a Henschel mixer, a supermixer, a tumbler-type mixer or the like, and then the mixture is kneaded and pelletized using a single- or twin-screw extruder. Subsequently, the pellets are melted and formed into a sheet using a known molding machine, such as an extrusion molding machine equipped with a T-die or the like, or an inflation molding machine equipped with a cylindrical die. It is also possible to directly form a sheet without pelletizing. The sheet is stretched at least uniaxially at a temperature higher than room temperature and lower than the softening point of the resin by a known process, such as rolling or tentering, to cause the interfacial peeling between the resin and the fine particles, thus affording a porous film. The stretching may be performed at a single step or divided into multiple steps. As the need arises, a thermal treatment may be performed after the stretching to stabilize the forms of pores.

The composite film of the present invention has a laminating structure comprising the porous film of the present invention and a heat resistant resin. In addition to the characteristics of the porous film, the composite film has a characteristic of small shrinkage at heating. The composite film may be laminated further with a porous layer of polyolefine or polyurethane, according to the requirements.

The porous film of the heat resistant resin may contains inorganic fine powders. The amount of the inorganic fine powders, based on 100 parts by weight of the heat resistant resin, is suitably 1 to 1500 parts by weight, more suitably 5 to 100 parts by weight. The particle diameter of the inorganic fine powder is suitably less than the thickness of the porous film of the heat resistant resin. The average particle diameter of the primary particles is suitably 1.0 $\mu$m or less, and more suitably 0.5 $\mu$m or less. Examples of the inorganic fine particles include suitably alumina, silica, titan dioxide, zirconium oxide and calcium carbonate, without being limited. These are used alone or as a mixture of two or more. Further, it is possible to improve ion permeability by controlling the percentage of vacant spaces of the porous heat resistant resin film with the addition of inorganic fine powders.

As a heat-resistant resin which forms a heat-resistant porous film, a heat-resistant resin selected from those whose temperature of deflection under load measured at 18.6kg/cm$^2$ load according to JIS K 7207 is 100 °C or more is suitable.

In order to secure safety in still severe use under a high temperature, the heat-resistant resin in the present invention is more suitably at least one selected from those whose temperature of deflection under load is 200 °C or more.

Examples of the resin having temperature of deflection under load of 100 °C or more include polyimide, polyamideimide, aramid, polycarbonate, polyacetal, polysulfone, polyphenylsulfide, polyetheretherketone, aromatic polyester, polyether sulfone, polyether imide, etc. Examples of the resin having a temperature of deflection under load of 200 °C or more include polyimide, polyamideimide, aramid, polyethersulfone, polyetherimide, etc. Furthermore, it is especially suitable to select from the group consisting of polyimide, polyamideimide, and aramid as the heat-resistant resin.

Moreover, the heat-resistant resin in the present invention has suitably a limiting oxygen index of 20 or more. The limiting oxygen index is the minimum oxygen concentration where a test piece put in a glass tube can continue burning. As oxygen may generate from a cathode material at high temperature, it is preferable that the heat-resistant porous layer is flame retardant, in addition to heat resistant. Examples of such a resin include the above mentioned heat-resistant resins.

As the manufacture method of the composite porous film of the present invention, exemplified are a method of adhering a porous film and a porous film of heat-resistant resin with an adhesive or by heat fusion, and a method of coating a solution containing a heat-resistant resin on a porous film as a substrate, and removing the solvent from a heat-resistant resin film to produce a composite porous film of the present invention.

As the latter method, for example, a composite porous film of the present invention can be produced by a method comprising the steps of following (a) to (e).

(a) A solution comprising a heat-resistant resin and an organic solvent is prepared. By dispersing 1-1500 parts by weight of inorganic fine powders based on the 100 parts by weight of the heat-resistant resin, a slurry solution is prepared.
(b) A coated film is prepared by coating the solution or the slurry solution on a porous film.
(c) The heat resistant resin is deposited in the coated film.
(d) Organic solvent is removed from the coated film.
(e) The coated film is dried.

As the organic solvent, usually, a polar organic solvent is used. Examples of the polar organic solvent include N,N'-dimethylformamide, N,N'-dimethylacetamide, N-methyl-2-pyrrolidone, or tetramethylurea.

As a method of depositing a heat-resistant resin on a porous film, exemplified is a method which includes steps of keeping the porous film in an atmosphere of controlled humidity, depositing the heat-resistant resin, and immersing the porous film in a coagulation solvent.

As the coagulation solvent, aqueous or alcoholic solution can be used without being limited. Since a solvent recovery process is simplified, industrially, it is suitable to use aqueous solution or alcoholic solution containing a polar organic solvent. An aqueous solution containing a polar organic solvent is more suitable.

Moreover, the porous film can also be immersed in a coagulation solvent, without depositing the heat resistant resin by keeping the porous film in an atmosphere of controlled humidity.

Furthermore, in case of a heat-resistant resin (e.g. aramid) which cannot be re-dissolved after the deposition once from a solution, the heat-resistant resin can be deposited at the same time of evaporating a part or all of the solvent, that is, the deposition process and the following solvent removal process can be conducted simultaneously.

As a method of removing a polar organic solvent, a part or all of the solvent may be evaporated, or the solvent can be removed by extraction with using a solvent which can dissolve a polar organic solvent, such as water, an aqueous solution, or an alcoholic solution.

In case of removing it using water, it is suitable to use ion-exchanged water. Moreover, afterwashing with an aqueous solution containing a polar organic solvent in a constant concentration, washing further with water is also industrially suitable.

After removing a polar organic solvent, drying process is performed. In the drying process, the solvent for washing is removed by evaporation with heating. The drying temperature at this time is suitably below the heat distortion temperature of the porous film.

Furthermore, a case is explained where a para-oriented aromatic polyamide (referred to as para-aramid) is used as a heat-resistant resin.

For example, in a polar organic solvent in which 2 to 10% by weight of a chloride of an alkali metal or an alkaline earth metal is dissolved, 0.94-0.99 mol of a para-oriented aromatic dicarboxylic acid dihalide are added to 1.00 mol of a para-oriented aromatic diamine. By carrying out condensation polymerization at a temperature of -20 °C to 50 °C, a solution consisting of a para-aramid and the organic solvent is prepared, where the para-aramid concentration is 1 - 10% and the inherent viscosity is usually 1.0 to 2.8dl/g.

Using this solution, a composite porous film having a laminated structure of the porous film and the para-aramid porous film can be obtained by the above-mentioned process.

In case of para-aramid, for removing the solvent and the chloride, they can be washed with the same solvent as coagulation solvents, such as water and methanol. After evaporating a part or all of the solvent and depositing the polymer at the same time, the chloride can also be removed by a method such as washing with water.

The separator for a battery of the present invention includes the above porous film or the composite porous film. In view of ion permeability, the film resistance of the porous film or the composite porous film is suitably 5 or less.

As the shrinkage rate is small in heating, the composite film is preferable, in view of safety improvement,

When the porous film is used as a separator in a lithium secondary battery or a like battery, the porous film preferably has a thickness of 5 to 50 $\mu$m, more preferably 10 to 50 $\mu$m and further suitably 10 to 30 $\mu$m, because it is required to be thin and to have a high strength.

The percentage of vacant spaces of the porous film used for a battery separator is suitably 30 to 80 volume %, and more suitably 40 to 70 volume %. When the percentage of vacant spaces is less than 30 volume %, the retention amount of an electrolyte may decrease. When the percentage of vacant spaces is more than 80 volume%, the strength of the shut-down layer may become insufficient, and the shut-down function may deteriorate sometimes.

The thickness of the porous film is suitably 5 to 50 $\mu$m, more suitably 10 to 50 $\mu$m, and further suitably 10 to 30$\mu$m. When the thickness is less than 5 $\mu$m, the shut-down function may be insufficient, and may short-circuit during winding. When the thickness is more than 50 $\mu$m, the thickness including the porous film of the heat resistant resin layer becomes too thick to obtain a high electric capacity.

The pore size of the above-mentioned porous film, is suitably 0.1 $\mu$m or less, and more suitably 0.08 $\mu$m or less. When the pore size is smaller, the film resistance of the porous film becomes lower comparing with that of a porous film having the same degree of gas transmission.

In the composite porous film for a battery separator of the present invention, the percentage of vacant spaces and the pore size of the porous film are the same with the above porous film. As for the thickness of the porous film, the total thickness of the composite porous film is suitably 5 to 50 $\mu$m, more suitably 10 to 50 $\mu$m, and further suitably 10 to 30 $\mu$m.

The percentage of the vacant spaces of the heat-resistant porous layer is suitably 30 to 80 volume%, more suitably 40 to 70 volume%. When the percentage is lower than 30 volume %, the retention amount of electrolyte may become insufficient, and when it is more than 80 volume%, the strength of a heat-resistant porous film will become insufficient.

The thickness of the heat-resistant porous layer has suitably 0.5 $\mu$m to 10 $\mu$m, and more suitably 1 $\mu$m to 5 $\mu$m. When the thickness is less than 0.5 $\mu$m, the heat-resistant porous layer may sometimes not suppress the shrinkage during heating, and when the thickness is more than 10 $\mu$m, load characteristic may be deteriorated.

The battery of the present invention includes the separator for battery of the present invention.
Below, the other components other than the separator will be explained, as for a non-aqueous electrolyte secondary battery, such as a lithium battery, without being limited.

As a nonaqueous electrolyte solution, nonaqueous electrolyte solution made by dissolving a lithium salt in an organic solvent can be used. Examples of the lithium salt include $LiClO_4$, $LiPF_6$, $LiAsF_6$, $LiSbF_6$, $LiBF_4$, $LiCF_3SO_3$, $LiN(SO_2CF_3)_2$ and $LiC(SO_2CF_3)_3$, $Li_2B_{10}Cl_{10}$, a lithium salt of lower aliphatic carboxylic acid, $LiAlCl4$, etc. which can be used alone or in combination of two or more. Among them, suitable is those selected at least one or more from the group containing fluorine which consist of $LiPF_6$, $LiAsF_6$, $LiSbF_6$, $LiBF_4$, $LiCF_3SO_3$, $LiN(CF_3SO_2)_2$ and $LiC(CF_3SO_2)_3$.

Examples of the organic solvent used for a nonaqueous electrolyte solution include: carbonates, such as propylene carbonate, ethylene carbonate, dimethyl carbonate, diethyl carbonate, ethyl methyl carbonate, 4-trifluoromethyl-1, 3-dioxolane-2-one, 1,2-di(methoxycarbonyloxy)ethane; ethers , such as 1,2-dimethoxyethane, 1,3-dimethoxypropane, pentafluoropropylmethylether, 2,2,3,3-tetrafluoropropyl difluoromethylether, tetrahydrofuran, and 2-methyl tetrahydrofuran; esters, such as methylformate, methyl acetate, and $\gamma$-butyrolactone; nitriles, such as acetonitrile and butyronitrile; amides, such as N,N-dimethylformamide, N,N-dimethyl acetamide; carbamates, such as 3-methyl-2-oxazolidone; sulfur containing compounds, such as sulfolane, dimethyl sulfoxide, 1,3-prbpanesulfone; and the above-mentioned organic solvents containing fluorinated substituents. Usually, two or more of these are mixed and used.

Among them, mixed solvent containing a carbonate is suitable. Mixture of cyclic carbonate and non-cyclic carbonate or cyclic carbonate and ether is more suitable.

As a mixed solvent of cyclic carbonate and non-cyclic carbonate, a mixed solvent containing ethylene carbonate, dimethyl carbonate, and ethyl methyl carbonate is suitable.

The solvent has wide range of operating temperature and excellent load characteristic. And even when a graphite material, such as natural graphite or artificial graphite, is used as an active material of anode, it is hardly decomposed.

As a cathode sheet, a composition supported on a current collector, wherein the composition contains a cathode active material, a conductive substance, and a binder is used. Specifically, those include a material that can be doped/undoped with a lithium ion as the cathode active material, a carbonaceous material as a conductive substance, and a thermoplastic resin as a binder.

Examples of the material that can be doped/undoped with lithium ion include composite oxide of lithium including at least one kind of transition metals, such as V, Mn, Fe, Co, and Ni. Among them, in view of high average discharging electric potential, the layered composite oxide of lithium having $\alpha$ -$NaFeO_2$ type structure, such as lithiated nickel dioxide and lithiated cobalt dioxide, as a matrix, and the composite oxide of lithium having a spinel type structure, such as lithium manganese spinel, as a matrix are exemplified suitably.

The composite oxide of lithium may also contain various added elements. When the composite of lithiated nickel dioxide is used so that at least one of the above metal becomes 0.1-20% by mole to the sum of the number of moles of at least one metal selected from the group comprising Ti, V, Cr, Mn, Fe, Co, Cu, Ag, Mg, Al, Ga, In, and Sn, and the number of moles of nickel in lithiated nickel dioxide, the cycle property at a high capacity use is improved, and it is suitable.

Examples of the thermoplastic resin as the binder include: poly vinylidenefluoride, a copolymer of vinylidenefluoride, polytetrafluoroethylene, a copolymer of tetrafluoroethylene/hexafluoro propylene, a copolymer of tetrafluoroethylene/perfluoroalkylvinyl ether, a copolymer of ethylene/tetrafluoroethylene, a copolymer of vinylidenefluoride/hexafluoropropylene-tetrafluoroethylene thermoplastic polyimide, polyethylene, polypropylene, etc.

Examples of the carbonaceous material as the conductive substance include: natural graphite, artificial graphite, cokes, carbon black, etc. The conductive substance can be used alone, or also used as a mixture of two, for example, artificial graphite and carbon black.

As an anode sheet, a material that can be doped/undoped with lithium ion, lithium metal or lithium alloy can be used.

Examples of the material that can be doped/undoped with lithium ion include: carbonaceous materials, such as natural graphite, artificial graphite, cokes, carbon black, pyrolytic carbons, carbon fiber, and a fired organic polymer; and chalcogen compounds, such as oxide or sulfide etc.

Carbonaceous material having graphite materials, such as natural graphite or artificial graphite as a main component, is suitable, since potential flatness is high and average discharge electric potential is low, and high energy density is obtained when combining with a cathode.

As an anode current collector, Cu, Ni, stainless steel, etc. can be used, but in the point that it is hard to make an alloy with lithium especially in a lithium secondary battery and it is easy to mold it into a thin film, Cu is suitable.

As a method of supporting the composition containing anode active material on the anode current collector, exemplified are a method of pressurization molding, and a method of making paste with using a solvent etc., and press bonding after coating and drying on a current collector etc.

The form of the battery of the present invention is not especially limited, and exemplified are such as a paper type, a coin type, a cylinder type, and a square type.

EXAMPLES

Hereinafter, the present invention will be more specifically described by way of an example and comparative examples. The present invention is not limited to the following example.

In the example and comparative examples, properties of the porous films were measured as follows.

1. Gas transmission rate: Measured according to JIS P8117.
2. Average pore diameter: Measured according to ASTM F316-86.
3. Film thickness: Measured according to JIS K7130.
4. Piercing strength: A maximum stress (gf) generated when a pin pierced into the porous film at a portion fixed with a washer of 12 mm$\phi$ at a speed of 200 mm/min was determined as a piercing strength. In this case, the pin has a 1 mm$\phi$ pin diameter and a 0.5R tip.
5. Shrinkage rate: A porous film or composite porous film is sandwiched between Teflon sheets and leave it for 10 minutes at an arbitrary temperature. The shrinkage rate was calculated by the equation given below:

$$\text{Shrinkage rate} = (L_{25} - L_t)/L_{25} \times 100$$

where $L_{25}$ is the length of a separator in TD direction at 25°C, and $L_t$ is the length of a separator in TD direction after keeping at t°C for 10 minutes.

6. Inherent viscosity of para-aramid: The flow time was measured at 30°C with a capillary viscometer, with respect to 96 to 98% sulfuric acid and a solution obtained by dissolving 0.5 g of the para-aramid polymer in 100 ml of 96 to 98% sulfuric acid. The inherent viscosity was then calculated from the ratio of the observed flow time according to the equation given below:

$$\text{Inherent Viscosity} = \ln(T/T_0)/C \text{ [unit: dl/g]}$$

where T and To denote the flow time of the sulfuric acid solution of para-aramid and sulfuric acid, respectively, and C represents the para-aramid concentration (g/dl) in the sulfuric acid solution of para-aramid.

Example 1

<Preparation of Porous Film>

Kneading was performed using a Laboplasto-mill (manufactured by Toyo Seiki Seisaku-Sho, Ltd.). 70 parts by weight of an ultra-high-molecular-weight polyethylene powder ("HI-ZEXMILLION 340M" produced by Mitsui Chemicals Inc.: weight average molecular weight 3,000,000; density, 0.93g/cm$^3$), 30 parts by weight of polyethylene wax powder ("Hi-wax 110P" produced by Mitsui Chemicals Inc.: weight average molecular weight 1,000; density, 0.92 g/cm$^3$), and 0.05 parts by weight of an antioxidant ("Irg 1010" produced by Sumitomo Chemical Co., Ltd.) were homogeneously mixed together, and then kneaded at 200°C for 10 minutes by the Laboplasto-mill, followed by taking-out the homogeneous melt-kneaded matter from the Laboplasto-mill. The rotational speed at this time was 60 rpm.

Subsequently, 70 parts by volume of this kneaded matter was put into the Laboplasto-mill and fused, and then 30 parts by volume of calcium carbonate ("Sta-vigot A15" produced by Shiraishi Calcium Co. : average particle diameter, 0.15 $\mu$m) was introduced into the Laboplasto-mill, followed by kneading at 200°C for 5 minutes. The resulting kneaded matter was formed into a sheet having a thickness of 60 to 70 $\mu$m with a hot press set at 200°C and the sheet was solidified by a chill press. The sheet thus obtained was cut to an appropriate size (about 8cm (width) x 5cm (length))and then uniaxially stretched to open pores using Autograph (AGS-G, produced by Shimadzu Corporation), thus affording a porous film. The stretching was performed at 100°C and at a stretching speed of 50 mm/min. The resulting porous film was immersed in a hydrochloric acid/ethanol solution (hydrochloric acid : ethanol = 1 : 1) to dissolve calcium carbonate. After the dissolution, the porous film was washed with ethanol and dried at 60°C under reduced pressure. The physical properties of the porous film thus obtained are shown in Table 1, the shrinkage rate in Table 2.

Meanwhile, the compatibility was confirmed as follows. A kneaded composition was prepared as the same manner with the above, using the ultra-high-molecular-weight polyethylene powder and the polyethylene wax powder in a ratio of 1:1, and the kneaded matter was processed into a sheet of 60-70 $\mu$m thickness by a heat press at a setting temperature of 200°C. After solidifying, the sheet was cut into appropriate sizes, and stretched uniaxially by Autograph at 100°C. The obtained filmwas homogeneous and the both were confirmed to be compatible each other.

Example 2

< Synthesis of para-aramid solution >

Poly(para-phenylene terephthalamide) (hereinafter referred to as PPTA) was synthesized in a 5-liter separable flask with an agitating blade, a thermometer, a nitrogen flow-in pipe, and a powder inlet. In the flask sufficiently dried, 272.65 g of calcium chloride dried at 200°C for two hours were added to 4200 g of N-methyl-2-pyrrolidone (hereinafter referred to as NMP). The flask was then heated to 100°C. The flask was cooled down to room temperature after complete dissolution of calcium chloride, and 132.91 g of para-phenylene diamine (hereinafter referred to as PPD) were added and completely dissolved. While the solution was kept at the temperature of 20±2°C, 243.32 g of terephthalic acid dichloride (hereinafter referred to as TPC) were added in ten portions at approximately 5 minutes intervals. The solution was kept at the temperature of 20±2°C for one hour for maturation and then stirred under reduced pressure for 30 minutes for elimination of air bubbles. The polymer solution obtained showed optical anisotropy. A part of the polymer solution was sampled, and polymer was taken from the sampled polymer solution re-precipitated in water. The observed inherent viscosity of the PPTA thus obtained was 1.97 dl/g.

Then, 100 g of the polymer solution was added in a 500 ml separable flask with an agitating blade, a thermometer, a nitrogen flow-in pipe, and a powder inlet, and NMP solution was added gradually. Finally, PPTA solution having a PPTA concentration of 2.0 % by weight was prepared and referred as "A solution".

< Coating of para-aramid solution >

As a porous film, the porous film of polyethelene in Example 1 was used. A film-like material of "A solution" which is a heat resistant resin solution was coated on the porous film put on a glass plate with a bar-coater (clearance 200 $\mu$m: produced by Tester Industries Co., Ltd.). After keeping this as it was, in an oven of 30°C, 65% humidity for about 3 minutes, PPTA was precipitated and a clouded film-like material was obtained. The film-like material was immersed in 30 % NMP aqueous solution for 5 minutes. After immersing, the precipitated film-like material was separated from the glass plate. After washing the material with ion-exchange water enough, the wet film-like material was taken out of the water, and the free water was wiped away. The film-like material was sandwiched in Nylon sheet, and further in felt made of aramid. As in the state that the film-like material was sandwiched in Nylon sheet, and felt made of aramid, an aluminum plate was put on, a Nylon film was covered thereon, the Nylon film and the aluminum plate were sealed with gum, and a pipe for reducing pressure was attached. The whole was put in a heating oven, and the film-like material was dried with reducing pressure at 60°C, and a composite film was obtained. The physical properties of the porous film thus obtained are shown in Table 1, the shrinkage rate in Table 2.

Comparative Example 1

The temperature of the Laboplasto-mill was raised to 200°C, and 82 parts by weight of LLDPE ("FS240A" produced by Sumitomo Chemical Co., Ltd.: weight-average molecular weight, 110,000) and 18 parts by weight of LDPE ("F208-1" produced by Sumitomo Chemical Co., Ltd.: weight-average molecular weight, 80,000) were introduced into the Laboplasto-mill. After these PEs had been fused, to 70 parts by volume of the PEs, 30 parts by volume of hydrotalcite ("DHT-4A" produced by Kyowa Chemical Industry Co., Ltd. : average particle diameter, 0.4 $\mu$m) and then 0.1 parts by weight (to 100 parts by weight of PEs) of an antioxidant ("Irg 1010" produced by Sumitomo Chemical Co., Ltd.) were introduced into the Laboplasto-mill, followed by melt-kneading at 100 rpm for 5 minutes. The resulting kneaded matter was formed into a sheet having a thickness of 60 to 70 $\mu$m with a hot press set at 200°C and the sheet was solidified by a chill press. The sheet thus obtained was cut to an appropriate size and then uniaxially stretched to open pores using Autograph, thus affording a microporous film. The stretching was performed at 30°C and at a stretching speed of 50 mm/min. The physical properties of the porous film thus obtained are shown in Table 1.

Comparative Example 2

The temperature of the Laboplasto-mill was raised to 200°C, and 70 parts by volume of PP ("FS2011D" produced by Sumitomo Chemical Co. , Ltd. : weight-average molecular weight, 410,000) was introduced into the Laboplasto-mill. After the PP had been fused, 30 parts by volume of hydrotalcite ("DHT-4A" produced by Kyowa Chemical Industry Co., Ltd.: average particle diameter, 0.4 $\mu$m) and then 0.05 parts by weight (to 70 parts by weight of PP) of an antioxidant ("Irg 1010" produced by Sumitomo Chemical Co., Ltd.) were introduced into the Laboplasto-mill, followed by melt-kneading at 100 rpm for 5 minutes. The resulting kneaded matter was formed into a sheet having a thickness of 60 to 70 $\mu$m with a hot press set at 200°C and the sheet was solidified by a chill press. The sheet thus obtained was cut to an appropriate size and then uniaxially stretched to open pores using Autograph, thus affording a microporous film. The stretching was performed at 140°C and at a stretching speed of 50 mm/min. The physical properties of the porous film thus obtained are shown in Table 1.

Comparative Example 3

The temperature of a Laboplasto-mill was raised to 200°C, and 49 parts by weight of an ultra-high-molecular-weight polyethylene powder ("HI-ZEX MILLION 340M" produced by Mitsui Chemicals Inc.: weight average molecular weight 3,000,000; density, 0.93 g/cm$^3$), 34 parts by weight of metallocene type LLDPE ("SP4060" produced by Mitsui Chemicals Inc.: weight-average molecular weight, 70,000), 17 parts by weight of LDPE ("G808" produced by Sumitomo Chemical Co., Ltd.: weight-average molecular weight, 55,000), and 0.05 parts by weight of an anti-oxidant ("Irg1010" produced by Sumitomo Chemical Co., Ltd.) were introduced into the Laboplasto-mill, followed by melt-kneading at 100 rpm for 5 minutes. The resulting kneaded matter was formed into a sheet having a thickness of 60 to 70 $\mu$m with a hot press set at 200°C and the sheet was solidified by a chill press. The sheet thus obtained was cut to an appropriate size and then uniaxially stretched at 100°C using Autograph, thus affording a film. In the obtained sheet, ultra-high-molecular-weight polyethylene was observed as not compatible and remained as powders.

Subsequently, 70 parts by volume of this kneaded matter was put into the Laboplasto-mill and fused, and then 30 parts by volume of calcium carbonate ("Sta-vigot A15" produced by Shiraishi Calcium Co. : average particle diameter, 0.15 $\mu$m) was introduced into the Laboplasto-mill, followed by kneading at 200°C for 5 minutes. The resulting kneaded matter was formed into a sheet having a thickness of 60 to 70 $\mu$m with a hot press set at 200°C and the sheet was solidified by a chill press. The sheet thus obtained was cut to an appropriate size and then uniaxially stretched to open pores using Autograph, thus affording a porous film. The stretching was performed at 100°C and at a stretching speed of 50 mm/min. The resulting porous film was immersed in a hydrochloric acid/ethanol solution (hydrochloric acid : ethanol = 1 : 1) to dissolve calcium carbonate. After the dissolution, the porous film was washed with ethanol and dried at 60°C under reduced pressure. The physical properties of the porous film thus obtained are shown in Table 1.

Comparative Example 4

The temperature of a Laboplasto-mill was raised to 200°C, and 70 parts by weight of an ultra-high-molecular-weight polyethylene powder ("HI-ZEX MILLION 340M" produced by Mitsui Chemicals Inc.: weight average molecular weight, 3,000,000; density, 0.93 g/cm$^3$), 30 parts by weight of a polyethylene wax powder ("Hi-wax 110P" produced by Mitsui Chemicals Inc.: weight average molecular weight, 1,000), and 0.05 parts by weight of an antioxidant ("Irg 1010" produced by Sumitomo Chemical Co., Ltd.) were homogeneously mixed together, and then kneaded at 200°C for 10 minutes by the Laboplasto-mill, followed by taking-out the homogeneous melt-kneaded matter from the Laboplasto-mill. The resulting kneaded matter was formed into a sheet having a thickness of 60 to 70 $\mu$m with a hot press set at 200°C and the sheet was solidified by a chill press. The sheet thus obtained was cut to an appropriate size and then uniaxially stretched at 100°C using Autograph. The obtained film was not a porous film.

Comparative Example 5

The temperature of a Laboplasto-mill was raised to 200°C, and 70 parts by weight of an ultra-high-molecular-weight polyethylene powder ("HI-ZEX MILLION 340M" produced by Mitsui Chemicals Inc.: weight average molecular weight, 3,000,000; density, 0.93 g/cm$^3$), and 0.05 parts by weight of an antioxidant ("Irg 1010" produced by Sumitomo Chemical Co., Ltd.) were mixed together as powders, and then kneaded at 200°C for 10 minutes by the Laboplasto-mill.

Subsequently, 30 parts by volume of calcium carbonate ("Sta-vigot A15" produced by Shiraishi Calcium Co.: average particle diameter, 0.15 μm) to 70 parts by volume of the above polyethylene was introduced into the Laboplasto-mill, followed by kneading at 200°C for 5 minutes. The resulting kneaded matter was formed into a sheet having a thickness of 60 to 70 μm with a hot press set at 200°C and the sheet was solidified by a chill press. A thin sheet of good appearance could not be obtained even though sufficient pre-heating was applied.

Table 1

|  | Film Thickness (μm) | Gas transmission rate (sec/100cc) | Average Pore Diameter (μm) | Film Resistance (sec·μm$^2$/l00cc) | Piercing Strength (gf) |
|---|---|---|---|---|---|
| Example 1 | 30 | 778 | 0.07 | 3.8 | 440 |
| Example 2 | 32 | - | <0.05 | - | 330 |
| Comparative Example 1 | 28 | 390 | 0.30 | 35 | 197 |
| Comparative Example 2 | 42 | 62 | 0.19 | 2.2 | 185 |
| Comparative Example 3 | 61 | 688 | 0.11 | 8.3 | 385 |
| Comparative Example 4 | 44 | unmeasurable | unmeasurable | unmeasurable | 824 |

Table 2

| Temperature (°C) | Shrinkage rate (%) | |
|---|---|---|
|  | Example 1 | Example 2 |
| 90 | 0 | 0 |
| 100 | 0 | 0 |
| 110 | 0 | 0 |
| 120 | 0 | 0 |
| 130 | 1.5 | 0 |
| 140 | 4.5 | 0.6 |
| 150 | 18.2 | 1.5 |
| 160 | 21.2 | 3.0 |

The porous film of the present invention can be easily and simply prepared, has a high piercing strength and hence can be advantageously used as a separator for a battery, particularly for a lithium secondary battery.

## Claims

1. A porous film obtainable by melt-kneading a high-molecular-weight polyethylene having a weight-average molecular weight of not less than 5 x 10$^5$, a polyethylene having a weight-average molecular weight of not more than 2 x 10$^4$, and fine particles, molding the kneaded matter into a sheet, and then stretching the sheet, wherein the polyethylene having a weight-average molecular weight of not more than 2 x 10$^4$ has a density difference from the high-molecular-weight polyethylene of within 0.02 g/cm$^3$.

**2.** The porous film according to claim 1, wherein the amount of the high-molecular-weight polyethylene in the total of the high-molecular-weight polyethylene and the polyethylene having a weight-average molecular weight of not more than $2 \times 10^4$ is 30% to 90% by weight.

**3.** The porous film according to claim 1 or 2, wherein the fine particles are water-soluble.

**4.** The porous film according to claim 3, wherein the stretched sheet is washed with water to remove the fine particles

**5.** The porous film according to any of claims 1 to 4, wherein the film resistance defined by the formula (1) is not more than $5 \text{ sec}\cdot\mu\text{m}^2/100\text{cc}$,

$$\texttt{film resistance (sec}\cdot\mu\texttt{m}^2\texttt{/100cc)} = \texttt{td}^2... ...(1)$$

wherein t represents a gas transmission rate in terms of Gurley value (sec/100cc) and d represents a pore diameter ($\mu$m) determined by a bubble point method.

**6.** A composite porous film having a structure comprising a porous film according to any of claims 1 to 5 and a porous film of a heat-resistant resin.

**7.** A separator for battery, wherein the separator includes a porous film according to any of claims 1 to 5.

**8.** A separator for battery, wherein the separator includes a composite porous film according to claim 6.

**9.** A battery including a separator according to claim 7 or 8.


**Patentansprüche**

**1.** Poröse Folie, erhältlich durch Schmelzkneten eines Polyethylens mit hohem Molekulargewicht mit einem Gewichtsmittel des Molekulargewichts von nicht weniger als $5 \times 10^5$, eines Polyethylens mit einem Gewichtsmittel des Molekulargewichts von nicht mehr als $2 \times 10^4$ und Feinteilchen, Formen des gekneteten Materials in ein Bahnenmaterial und anschließend Strecken des Bahnenmaterials, wobei das Polyethylen mit einem Gewichtsmittel des Molekulargewichts von nicht mehr als $2 \times 10^4$ einen Dichte-Unterschied zum Polyethylen mit hohem Molekulargewicht innerhalb $\pm$ 0,02 g/cm$^3$ aufweist.

**2.** Poröse Folie gemäß Anspruch 1, wobei die Menge an Polyethylen mit hohem Molekulargewicht, bezogen auf die Gesamtmenge des Polyethylens mit hohem Molekulargewicht und des Polyethylens mit einem Gewichtsmittel des Molekulargewichts von nicht mehr als $2 \times 10^4$, 30 bis 90 Gew.-% beträgt.

**3.** Poröse Folie gemäß Anspruch 1 oder 2, wobei die Feinteilchen wasserlöslich sind.

**4.** Poröse Folie gemäß Anspruch 3, wobei das gestreckte Bahnenmaterial mit Wasser gewaschen wird, um die Feinteilchen zu entfernen.

**5.** Poröse Folie gemäß einem der Ansprüche 1 bis 4, wobei der durch die Formel (1) definierte Folienwiderstand nicht mehr als $5 \text{ s} \cdot \mu\text{m}^2/100 \text{ cm}^3$ beträgt,

$$\text{Folienwiderstand (s} \cdot \mu\text{m}^2/100 \text{ cm}^3) = \text{td}^2 \qquad\qquad (1)$$

wobei t eine Gastransportrate, bezogen auf den Gurley-Wert (s/100 cm$^3$), darstellt und d einen Porendurchmesser ($\mu$m), bestimmt durch ein Blasenpunktverfahren, darstellt.

**6.** Poröse Verbundfolie mit einer Struktur, umfassend eine poröse Folie gemäß einem der Ansprüche 1 bis 5 und eine poröse Folie eines wärmebeständigen Harzes.

7.  Separator für eine Batterie, wobei der Separator eine poröse Folie gemäß einem der Ansprüche 1 bis 5 einschließt.

8.  Separator für eine Batterie, wobei der Separator eine poröse Verbundfolie gemäß Anspruch 6 einschließt.

9.  Batterie, einschließlich eines Separators gemäß Anspruch 7 oder 8.

**Revendications**

1.  Film poreux pouvant être obtenu par malaxage en fusion d'un poly(éthylène) de masse moléculaire élevée ayant une masse moléculaire moyenne en masse non inférieure à $5 \times 10^5$, un poly(éthylène) ayant une masse moléculaire moyenne en masse non supérieure à $2 \times 10^4$ et des fines particules, en moulant la matière malaxée en une feuille puis en étirant la feuille, où le poly(éthylène) ayant une masse moléculaire moyenne en masse non supérieure à $2 \times 10^4$ a une différence de masse volumique avec le poly(éthylène) de masse moléculaire élevée dans l'intervalle de $\pm$ 0,02 $g/cm^3$.

2.  Film poreux selon la revendication 1, dans lequel la quantité du poly(éthylène) de masse moléculaire élevée dans le total du poly(éthylène) de masse moléculaire élevée et du poly(éthylène) ayant une masse moléculaire moyenne en masse non supérieure à $2 \times 10^4$ est de 30 % à 90 % en poids.

3.  Film poreux selon la revendication 1 ou 2, dans lequel les fines particules sont solubles dans l'eau.

4.  Film poreux selon la revendication 3, dans lequel la feuille étirée est lavée avec de l'eau pour éliminer les fines particules.

5.  Film poreux selon l'une quelconque des revendications 1 à 4, dans lequel la résistance de film définie par la formule (1) est non supérieure à 5 $s \cdot \mu m^2/100 \ cm^3$,

$$\text{résistance de film } (s \cdot \mu m^2/100 \ cm^3) = td^2 \ldots \ldots (1)$$

où t représente un taux de transmission de gaz en termes de valeur de Gurley (s/100 $cm^3$) et d représente un diamètre de pore ($\mu$m) déterminé par un procédé de point de bulle.

6.  Film poreux composite ayant une structure comprenant un film poreux selon l'une quelconque des revendications 1 à 5, et un film poreux d'une résine résistant à la chaleur.

7.  Séparateur pour batterie, dans lequel le séparateur comprend un film poreux selon l'une quelconque des revendications 1 à 5.

8.  Séparateur pour batterie, dans lequel le séparateur comprend un film poreux composite selon la revendication 6.

9.  Batterie comprenant un séparateur selon la revendication 7 ou 8.